# EUROPEAN PATENT APPLICATION

(11) **EP 4 647 885 A1**
(43) Date of publication of application: **12.11.2025**
(21) Application number: 24738527.1
(22) Date of filing: 04.01.2024
(51) Int. Cl.: G06F 3/0484

(54) **INTERACTION METHOD AND APPARATUS, DEVICE, STORAGE MEDIUM AND PROGRAM PRODUCT**

(30) Priority: 04.01.2023 CN 202310010399
(71) Applicant: Beijing Zitiao Network Technology Co., Ltd., Beijing 100190 (CN)
(72) Inventor: FAN, Teng, Beijing 100028 (CN); CAI, Jiaqin, Beijing 100028 (CN)
(74) Representative: Marks & Clerk LLP
(86) International application number: PCT/CN2024/070548
(87) International publication number: WO 2024/146594

(57) **Abstract**

Embodiments of the present disclosure provide an interaction method and apparatus, a device, a storage medium and a program product. The method comprises: receiving a page display operation of a first user for a target live-streaming room; and in response to the page display operation, displaying a live-streaming page of the target live-streaming room, and displaying in the live-streaming page target interaction information in the target live-streaming room, wherein the target interaction information is used for triggering display of an association list of a corresponding second user, and the second user is a user that sends the target interaction information in the target live-streaming room. According to the embodiments of the present disclosure, list information of the association list sent by the user in the live-streaming room in the form of interaction information is displayed in the live-streaming page, so that the user in the live-streaming room can be supported to publish the list information of the association list as the interaction information in the live-streaming room, thus enriching the interaction mode in the live-streaming room and the display content of the live-streaming page.

## Description

The present application claims the priority and benefits of Chinese patent application No. 202310010399.0, filed on Jan. 4, 2023, which is incorporated herein by reference in its entirety as part of the present application.

### TECHNICAL FIELD

Embodiments of the present disclosure relate to a method for interaction and an apparatus, a device, a storage medium, and a program product.

### BACKGROUND

With rapid development of Internet technologies and unceasing diversification of video applications, more and more users today can give a performance online with the help of their electronic devices, such as listening to live streamers singing songs in their live stream rooms or singing songs in own live stream rooms, and rating can be done online after performance.

In some cases, the mode of communication in a live stream room is relatively limited.

### SUMMARY

Provided in the embodiments of the present disclosure are a method for interaction and an apparatus, a device, a storage medium, and a program product, with an aim to bring more diversified communication in live stream rooms.

In a first aspect, provided in the embodiment of the present disclosure is a method for interaction, including:
receiving a page display operation of a first user for a target live stream room; and
displaying a live stream page of the target live stream room in response to the page display operation, and presenting, in the live stream page, target interaction information in the target live stream room, the target interaction information is used for triggering display of an association list of a corresponding second user, and the second user is a user sending the target interaction information in the target live stream room.

In a second aspect, also provided in the embodiment of the present disclosure is an apparatus for interaction, and the apparatus includes a receiving module and a responding module.

The receiving module is configured to receive a page display operation of a first user for a target live stream room.

The responding module is configured to display a live stream page of the target live stream room in response to the page display operation, and present, in the live stream page, target interaction information in the target live stream room, the target interaction information being used for triggering display of an association list of a corresponding second user, and the second user being a user sending the target interaction information in the target live stream room.

In a third aspect, also provided in the present disclosure is an electronic device, including:
one or more processors; and
a memory for storing one or more programs,
the one or more programs, when executed by the one or more processors, causing the one or more processors to implement the method for interaction according to the embodiment of the present disclosure.

In a fourth aspect, also provided in the embodiment of the present disclosure is a computer-readable storage medium having a computer program stored thereon that, when executed by a processor, implements the method for interaction according to the embodiment of the present disclosure.

In a fifth aspect, also provided in the embodiment of the present disclosure is a computer program product that, when executed by a computer, causes the computer to implement the method for interaction according to the embodiment of the present disclosure.

### BRIEF DESCRIPTION OF DRAWINGS

The above and other features, advantages and aspects of the embodiments of the present disclosure will become more apparent in conjunction with the accompanying drawings and with reference to the Detailed Description that follows. Throughout the drawings, identical or similar reference numbers indicate identical or similar elements. It shall be understood that the drawings are schematic and that the originals and elements are not necessarily drawn to scale.
Fig. 1 is a schematic flowchart of a method for interaction according to the embodiment of the present disclosure;
Fig. 2 is a schematic diagram of displaying target interaction information according to the embodiment of the present disclosure;
Fig. 3 is a schematic diagram of displaying first association list information according to the embodiment of the present disclosure;
Fig. 4 is a schematic diagram of displaying preset prompt information according to the embodiment of the present disclosure;
Fig. 5 is a schematic diagram of displaying preset prompt information according to the embodiment of the present disclosure;
Fig. 6 is a schematic diagram of displaying second list information according to the embodiment of the present disclosure;
Fig. 7 is a schematic flowchart of a method for interaction according to the embodiment of the present disclosure;
Fig. 8 is a schematic diagram of displaying a target association list according to the embodiment of the present disclosure;
Fig. 9 is a schematic diagram of displaying a target association list according to the embodiment of the present disclosure;
Fig. 10 is a schematic diagram of adding a target task according to the embodiment of the present disclosure;
Fig. 11 is a schematic diagram of adding a target task according to the embodiment of the present disclosure;
Fig. 12 is a schematic diagram of adding a target task according to the embodiment of the present disclosure;
Fig. 13 is a schematic flowchart of an apparatus for interaction according to the embodiment of the present disclosure; and
Fig. 14 is a structural schematic diagram of an electronic device according to the embodiment of the present disclosure.

### DETAILED DESCRIPTION

The embodiments of the present disclosure will be described in more detail below with reference to the accompanying drawings. Although some embodiments of the present disclosure are shown in the drawings, it shall be understood that the present disclosure can be implemented in various forms and shall not be construed as being limited to the embodiments set forth herein. Rather, these embodiments are provided for a more thorough and complete understanding of the present disclosure. It shall be understood that the drawings and embodiments of the present disclosure are for exemplary purposes only and are not intended to limit the scope of the present disclosure.

It shall be understood that various steps stated in the method implementation of the present disclosure may be executed in different orders and/or in parallel. In addition, the method implementation may include additional steps and/or omit the steps shown during execution. In this regard, the scope of the present disclosure is not limited.

The term "includes" and its variants as used herein are open inclusion, i.e., "including but not limited to". The term "based on" is "at least partially based on". The term "one embodiment" means "at least one embodiment"; the term "another embodiment" means "at least one additional embodiment"; and the term "some embodiments" means "at least some embodiments". The relevant definitions of other terms will be given in the following description.

It shall be noted that the concepts "first", "second", etc., mentioned in the present disclosure are only used to distinguish different apparatuses, modules or units, rather than defining the order or interdependence of functions performed by these apparatuses, modules or units.

It shall be noted that modifications "one" and "more" mentioned in the present disclosure are exemplary and nonlimiting. Those skilled in the art shall appreciate that such modifications shall be understood as "one or more", unless the context expressly indicates otherwise.

The names of messages or information exchanged among a plurality of apparatuses in the implementations of the present disclosure are for illustrative purposes only and are not intended to limit the scope of these messages or information.

It can be understood that prior to use of the technical solution disclosed in each embodiment of the present disclosure, the type, scope of use, and usage scenario of personal information involved in the present disclosure shall be informed to and authorized by users through appropriate means in accordance with relevant laws and regulations.

For example, in response to reception of an active request from a user, a prompt message is sent to the user to explicitly remind the user that operations requested to be performed will necessitate acquisition and use of the user's personal information. As a result, the user is able to autonomously select, based on the prompt information, whether to provide his/her personal information to software or hardware performing the operations of the technical solutions of the present disclosure, such as electronic devices, applications, servers, storage media, etc..

As an alternative but non-limiting implementation, in response to reception of the active request from the user, the way to send the prompt message to the user may be, for example, a pop-up window in which the prompt information may be presented in the form of texts. In addition, the pop-up window may also carry a selection control for the user to select "Agree" or "Disagree" with respect to provision of personal information to the electronic device.

It can be understood that the above-mentioned notification and process of being authorized by the user are only exemplary and do not limit the implementations of the present disclosure, and other approaches that meet relevant laws and regulations may also be applied in the implementations of the present disclosure.

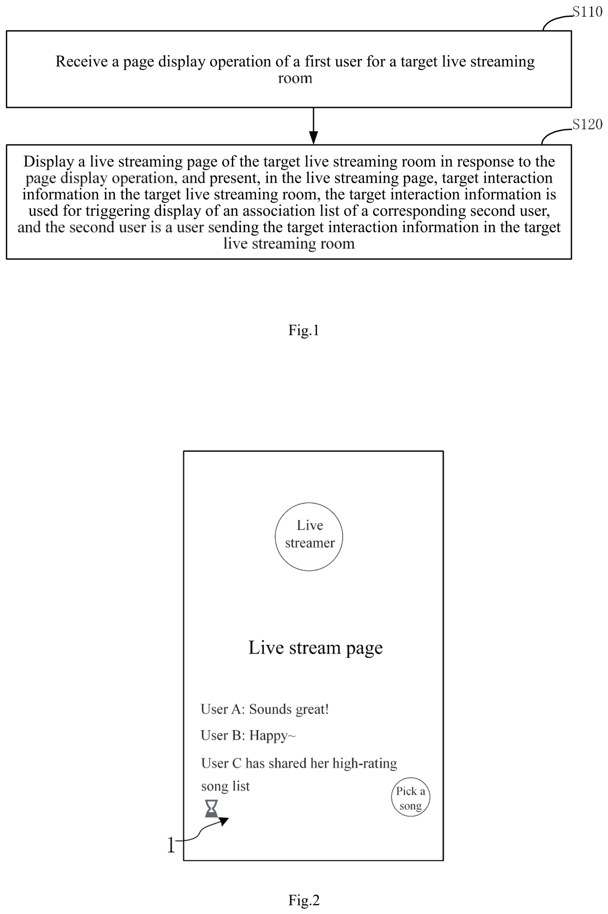

Fig. 1 is a schematic flowchart of a method for interaction according to the embodiment of the present disclosure. This method may be executed by an apparatus for interaction, in which this apparatus may be implemented in software and/or hardware and is configurable in an electronic device, such as configurable in a mobile phone or a tablet. The method for interaction according to the embodiment of the present disclosure is applicable to scenarios where interaction occurs in a live stream room. As shown in Fig. 1, the method for interaction provided in this embodiment may include:
S110: receive a page display operation of a first user for a target live stream room.

The first user may refer to a current user, and the current user may refer to a user who currently uses this electronic device or application, such as user who currently watches live stream, i.e., user who executes the page display operation.

The page display operation may refer to an operation for triggering viewing of the live stream page of a certain live stream room, the specific operating mode of the page display operation in this embodiment is not limited, e.g., the page display operation may be an operation of clicking a certain control in the page and may also be an operation of making a preset gesture in the page, the preset gesture may be a gesture that is set in advance, e.g., the preset gesture may be a left swiping gesture, etc.. The target live stream room may refer to a live stream room for which the first user currently triggers the page display operation, i.e., this page display operation acts on a live stream room the live stream page of which is indicated to be displayed.

Specifically, in this step, the page display operation of the first user for the target live stream room may be received such that the first user may enter the target live stream room and watch live stream, the page display operation may act on a different page, and this is not elaborated in this embodiment, as long as the page display operation of the first user for the target live stream room can be received.

S120: display a live stream page of the target live stream room in response to the page display operation, and present, in the live stream page, target interaction information in the target live stream room, in which the target interaction information is used for triggering display of an association list of a corresponding second user, and the second user is a user sending the target interaction information in the target live stream room.

The live stream page may be a page for live stream by a current live streamer in the target live stream room. It is believed that the current live streamer may interact with at least one user in the live stream room, such as chatting, singing, etc., and meanwhile, users may interact by sending communication information, in order to respond to the current live streamer or communicate with other users.

The interaction information may be considered as information for user interaction in the target live stream room, such as comments, bullet screen, other information, etc.. The target interaction information may be considered as interaction information for triggering display of the association list of the corresponding second user. The association list may refer to a list corresponding to the target interaction information, such as a task list. The task list may be a task list of preset tasks which have been completely executed by corresponding users and the degree of completion of which is greater than a preset completion level threshold. The preset task, for example, may be a performance task, such as a song singing task, in which case the association list may be a song list. The song list may be a list of songs the second user has sung, or a list of high-rating songs the second user has sung, etc.. The second user is a user sending the target interaction information, and may include the first user, or a user other than the first user in the target live stream room.

In this step, in response to the page display operation, the live stream page of the target live stream room may be displayed, and the target interaction information in the live stream room may be presented in the live stream page, e.g., the mode of presentation may be set based on actual page conditions, and this is not limited in this embodiment.

Exemplarily, the target interaction information in the live stream room may be presented in the live stream page, this target interaction information may be sent by a certain second user (such as user a), so this target interaction information may be used for triggering display of the association list of user a.

Fig. 2 is a schematic diagram of displaying target interaction information according to the embodiment of the present disclosure. As shown in Fig. 2 (shown in the drawing is an example in which a third user is the live streamer), target interaction information 1, i.e., words "High-Rating Song List", is presented in the live stream page and used for triggering display of the association list, such as a high-rating song list, of user C (i.e., the second user). The high-rating song list may be considered as a list of songs the degree of completion of which is greater than the preset completion level threshold.

In one embodiment, the second user includes the first user, and before presenting, in the live stream page, target interaction information in the target live stream room, the following step is further included:
sending the target interaction information in the target live stream room in response to an information sending operation of the first user.

The information sending operation may refer to an operation of sending the target interaction information, e.g., the information sending operation may be an operation of clicking a certain control in the page or an operation of clicking a certain pop-up window in the page, and the pop-up window may contain prompt information that the target interaction information is sent or display the association list of the first user. The target interaction information may be list information of the association list of the second user, such as name of the association list, the association lists of different second users may have identical or different list information, and the list information may be used for characterizing the association list. Exemplarily, the list information may be textual description, such as "High-Rating Song List", and may also be graphical description, etc..

In one implementation, the first user may send own target interaction information in the target live stream room. For example, the first user may execute the information sending operation, and upon identification of the information sending operation, an electronic device or application may send the target interaction information of the first user in the target live stream room in response to this information sending operation, in order to present this target interaction information in the live stream page.

In one embodiment, the second user includes a user other than the first user, and before presenting, in the live stream page, target interaction information in the target live stream room, the following step is further included:
obtaining the target interaction information sent by the user other than the first user in the target live stream room.

In one implementation, the second user may also include the user other than the first user, i.e., the user other than the first user in the target live stream room may also send own target interaction information in the target live stream room. In this case, the target interaction information sent by the user other than the first user in the target live stream room may also be obtained, so as to present, in the live stream page, the target interaction information sent by other users.

In one embodiment, the method further includes:
displaying a sending control in the live stream page in response to a preset triggering operation, the sending control being used for triggering execution of the information sending operation.

The preset triggering operation may refer to a triggering operation for indicating display of the sending control in the live stream page, e.g., the preset triggering operation may act on the live stream page, and this preset triggering operation may be considered as being executed as long as a certain location or control in the live stream page is triggered; the process of executing the preset triggering operation may also be that: upon detection of clicking, by a user, of a comment input box in the live stream page, a corresponding input panel in which a certain sharing control is presented may be displayed, and the operation of clicking this sharing control is the preset triggering operation. Accordingly, when the first user clicks this sharing control, the electronic device may determine that the preset triggering operation is received and display a sharing panel in the live stream page in response to this preset triggering operation, and the sending control that may be used for triggering execution of the information sending operation may be displayed in the sharing panel.

The method for interaction according to the embodiment of the present disclosure includes: receiving a page display operation of a first user for a target live stream room; and displaying a live stream page of the target live stream room in response to the page display operation, and presenting, in the live stream page, target interaction information in the target live stream room, in which the target interaction information is used for triggering display of an association list of a corresponding second user, and the second user is a user sending the target interaction information in the target live stream room. With this method, the list information of the association lists sent by the users in the live stream room in the form of interaction information is presented in the live stream page, thereby supporting the users in the live stream room to publish the list information of the association lists as the interaction information in the live stream room and enriching the mode of interaction of the live stream room as well as the display content of the live stream page.

In one embodiment, the association list is a task list, and the method further includes:
displaying, when a third user executes a target to-be-executed task in the target live stream room, first association list information of the third user in the live stream page, the first association list information being first list information of the association list; and/or
displaying preset prompt information in the live stream page when execution of the target to-be-executed task is completed by the third user and a completion level of the target to-be-executed task is greater than a preset completion level threshold.

The third user may refer to a user who is currently executing a task in the target live stream room. By taking a song singing task as the example, the third user may be a user who is currently singing in the target live stream room. The third user may be any user in the target live stream room, such as the first user, a target user, the live streamer, etc.; the target to-be-executed task is a certain to-be-executed task, such as a song singing task of singing a certain song; the first association list information may be first list information of the association list of the third user, the first list information may include, for example, whether the third user has high-rating songs, how many high-rating songs there are, and/or whether the song currently being sung is a high-rating song, etc., and high-rating songs may refer to songs that have a larger degree of completion than the preset completion level threshold.

The degree of completion may refer to a completion level of the target to-be-executed task, such as the point of singing rating; the preset completion level threshold may refer to a preset threshold, which is used to determine, upon completion of execution of the target to-be-executed task (such as song 1) by the third user, whether song 1 is the high-rating song of the third user; the preset prompt information may be used for prompting the condition of execution of the target to-be-executed task, and includes, for example, whether the target to-be-executed task has become the high-rating song of the third user or information regarding the completion level of the target to-be-executed task, such as how much more degree of completion does the target to-be-executed task need to become the high-rating song of the third user.

In one implementation, when the third user executes the target to-be-executed task in the target live stream room, the first association list information of the third user may be displayed in the live stream page. The mode of displaying the first association list information is not limited, e.g., the first association list information may be displayed all the time during execution of the target to-be-executed task by the third user, and not displayed at the end of execution of the target to-be-executed task; or the first association list information may also be displayed within a preset period of time for the third user to begin executing the target to-be-executed task (such as begin singing), and not displayed upon expiration of the preset period of time; or the first association list information is displayed just when the first user enters the target live stream room, and not displayed upon expiration of the preset period of time. The preset period of time may be empirically determined by related personnel.

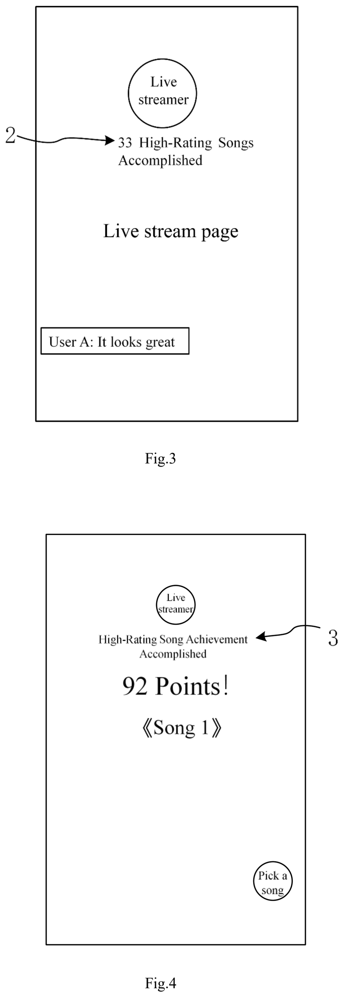

Giving an example in which the third user is the live streamer of the target live stream room, Fig. 3 is a schematic diagram of displaying first association list information according to the embodiment of the present disclosure. As shown in Fig. 3, when the live streamer executes the target to-be-executed task (such as singing song 1) in the target live stream room, first association list information 2 of the live streamer, i.e., "33 High-Rating Songs Accomplished", may be displayed in the live stream page, e.g., "33 High-Rating Songs Accomplished" is displayed within 10s (i.e., the preset period of time) before the live streamer begins singing song 1, and over 10s later, "33 High-Rating Songs Accomplished" is not displayed.

In one implementation, when execution of the target to-be-executed task is completed by the third user and the completion level of the target to-be-executed task is greater than the preset completion level threshold, the completion level of the target to-be-executed task may be considered as exceeding the preset completion level threshold, in which case preset prompt information may be displayed in the live stream page, e.g., the target to-be-executed task is the high-rating song of the third user, etc..

In one embodiment, if, prior to execution of the target to-be-executed task, the song indicated by the target to-be-executed task is not included in the association list (such as the high-rating song list) and the degree of completion of the current target to-be-executed task is greater than the preset completion level threshold, then this song may be added into the high-rating song list, e.g., the association list of the third user may be updated by a server of the application.

In one implementation, when execution of the target to-be-executed task is completed by the third user and the completion level of the target to-be-executed task is not greater than the preset completion level threshold, the completion level of the target to-be-executed task may be considered as not exceeding the preset completion level threshold, in which case preset prompt information may also be displayed in the live stream page, such as "Keep Fighting" and/or how much more degree of completion does the target to-be-executed task need to become the high-rating song of the third user, etc..

Giving an example in which the third user is the live streamer of the target live stream room, Fig. 4 is a schematic diagram of displaying preset prompt information according to the embodiment of the present disclosure. As shown in Fig. 4, when the live streamer finishes singing song 1 and the point of singing rating is greater than the preset completion level threshold (such as 80 points), preset prompt information 3, i.e., "High-Rating Song Achievement Accomplished", may be displayed in the live stream page.

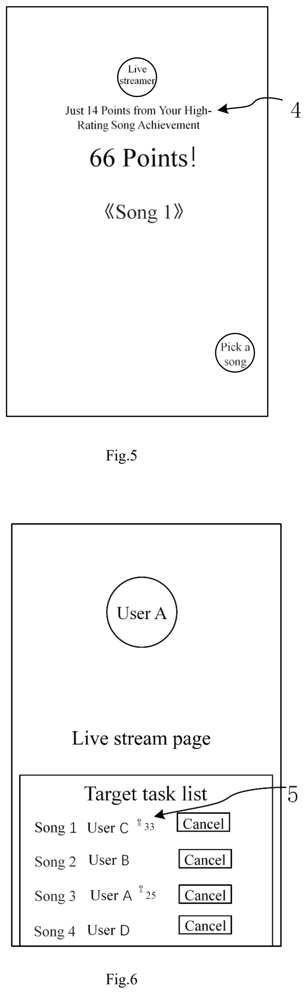

Giving an example in which the third user is the live streamer of the target live stream room, Fig. 5 is a schematic diagram of displaying preset prompt information according to the embodiment of the present disclosure. As shown in Fig. 5, when the live streamer finishes singing song 1 and the point of singing rating is smaller than the preset completion level threshold, preset prompt information 4, i.e., "Just 14 Points from Your High-Rating Song Achievement", may be displayed in the live stream page.

In one embodiment, the association list is a task list, and after the displaying a live stream page of the target live stream room, the following step is further included:
displaying a target task list of the target live stream room in response to a second list display operation, in which the target task list is used for displaying task information in the target live stream room, the task information corresponding to user for which the association list is not empty includes second association list information of the corresponding users, and the second association list information is second list information of the association list.

The second list display operation may refer to an operation of triggering display of the target task list, the target task list may be used for displaying the task information in the target live stream room, the task information may include to-be-executed task information or task request information, etc., the to-be-executed task information may be used for characterizing which tasks currently need to be done by which users in the target live stream room, and the task request information may be used for characterizing a request for application tasks that are currently pending processing by the live streamer in the target live stream room, such as applying for addition of the to-be-executed task, etc..

In this embodiment, the second association list information may be the second list information of the association list, the second list information may be the list information of the association list, such as a high-rating song tag, which may be used to show how many high-rating songs have been sung by the corresponding user, etc..

In one implementation, after the live stream page of the target live stream room is displayed, the target task list of the target live stream room may also be displayed in response to the second list display operation, the task information in the target live stream room is displayed in the target task list, and when the association list is not empty, the corresponding task information may also include the second association list information of the corresponding user (such as user who executes the task corresponding to this task information or user who requests to add the task corresponding to this task information as the to-be-executed task, etc.), such as how many high-rating songs have been sung by the corresponding user, etc.. On this basis, it becomes more convenient for a user to learn about the condition of execution, by other users, of preset tasks in his/her live stream room, and users' interaction experience is improved as well.

Fig. 6 is a schematic diagram of displaying second list information according to the embodiment of the present disclosure. As shown in Fig. 6, the target task list of the target live stream room may also be displayed in the live stream page of the target live stream room in response to the second list display operation, the task information corresponding to user for which the association list is not empty includes second list information 5 of the corresponding users, e.g., user C has sung 33 high-rating songs and user A has sung 25 high-rating songs.

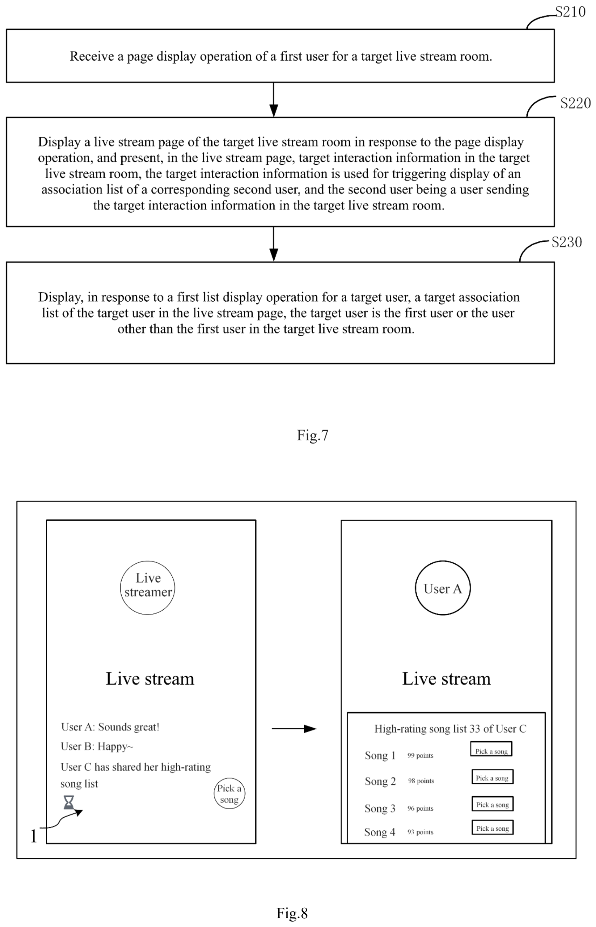

Fig. 7 is a schematic flowchart of another method for interaction according to the embodiment of the present disclosure. The solution in this embodiment may be combined with one or more alternative solutions in the above embodiments. Alternatively, after the displaying a live stream page of the target live stream room, the following step is further included: displaying, in response to a first list display operation for a target user, a target association list of the target user in the live stream page, the target user being the first user or the user other than the first user in the target live stream room. As shown in Fig. 7, the method includes:
S210: receive a page display operation of a first user for a target live stream room.
S220: display a live stream page of the target live stream room in response to the page display operation, and present, in the live stream page, target interaction information in the target live stream room, the target interaction information is used for triggering display of an association list of a corresponding second user, and the second user being a user sending the target interaction information in the target live stream room.
S230: display, in response to a first list display operation for a target user, a target association list of the target user in the live stream page, the target user is the first user or the user other than the first user in the target live stream room.

The first list display operation may refer to an operation of triggering display of the association list of a certain user in the live stream room, in which the specific operating mode of the first list display operation is not defined, e.g., the page display operation may act on different locations of the page. The target user may refer to a user corresponding to the association list indicated to be displayed by the page display operation, such as the first user or the user other than the first user in the target live stream room. The target association list may be considered as the association list of the target user.

In one embodiment, the first list display operation includes a triggering operation for target interaction information sent by the target user and/or a triggering operation for a list display control, and the list display control is corresponding to the target user.

The list display control may refer to a control triggering display of the target association list, the list display control may correspond to the target user, e.g., the list display control may be displayed in various types of pages to which the target user belongs, such as a preset panel of the target user, and the preset panel may be a panel that is set in advance, or a panel for displaying songs the target user sings, a song collection list, etc..

In one embodiment, the list display operation may include a triggering operation for the target interaction information, such as an operation of triggering clicking of the target interaction information; the list display operation may also include a triggering operation for the list display control, i.e., an operation of clicking the list display control is triggered in a page including the list display control.

Specifically, in this step, the target association list of the target user may be displayed in the live stream page in response to the first list display operation for the target user, the first list display operation may act on different locations in different pages, and specific details may be set as required.

Exemplarily, when the first user wants to view his/her own target association list, the first user (i.e., the current user) may trigger the first list display operation for the own target association list, such that the current application may be indicated to display the own target association list, e.g., the first user may click the target interaction information sent by himself/herself in the live stream page, such that the first list display operation may be executed to indicate the current application to display the association list of the first user; the list display control in the preset panel of the first user may also be clicked, such that the first list display operation may be executed to indicate the current application to display the association list of the first user; and also, the first user may click his/her own head portrait to enter own preset card and click the list display control in the preset card such that the first list display operation may be executed to indicate the current application to display the association list of the first user.

When the first user wants to view the target association lists of other users, the first user may click the target interaction information of other users in the live stream room, such that the first list display operation may be executed to indicate the current application to display the association lists of other users; the head portraits of other users may also be clicked to enter the preset cards of other users and the list display controls in the preset cards are clicked such that the first list display operation may be executed to indicate the current application to display the association lists of other users.

Fig. 8 is a schematic diagram of displaying a target association list according to the embodiment of the present disclosure. As shown in Fig. 8, the first user may click target interaction information 1 in the live stream room, such that the current application may be indicated to display the target association list through the first list display operation.

In one embodiment, the method further includes:
displaying a preset panel of the first user in response to a panel display operation, in which a list display control corresponding to the first user is displayed in the preset panel; or
displaying a preset card of the target user in response to a preset card display operation, in which the list display control corresponding to the target user is displayed in the preset card.

The panel display operation may refer to an operation of triggering display of the preset panel, the list display control corresponding to the first user is displayed in the preset panel, the list display control is used for triggering display of the association list, and the list display control may display information regarding the number of preset tasks included in the task list of the first user, such as information regarding the number of songs in the high-rating song list, etc.. The preset card display operation may refer to an operation of triggering display of the preset card, the preset card may, for example, be a personal data card of the user, and the list display control corresponding to the target user is displayed in the preset card.

In this embodiment, the preset panel of the first user may be displayed in response to the panel display operation, and the preset card of the target user may also be displayed in response to the preset card display operation, such that the first user may execute the first list display operation.

The location on which the panel display operation and the preset card display operation act is not limited, e.g., the panel display operation may act on a certain control in the live stream page and the preset card display operation may act on the head portrait of the target user.

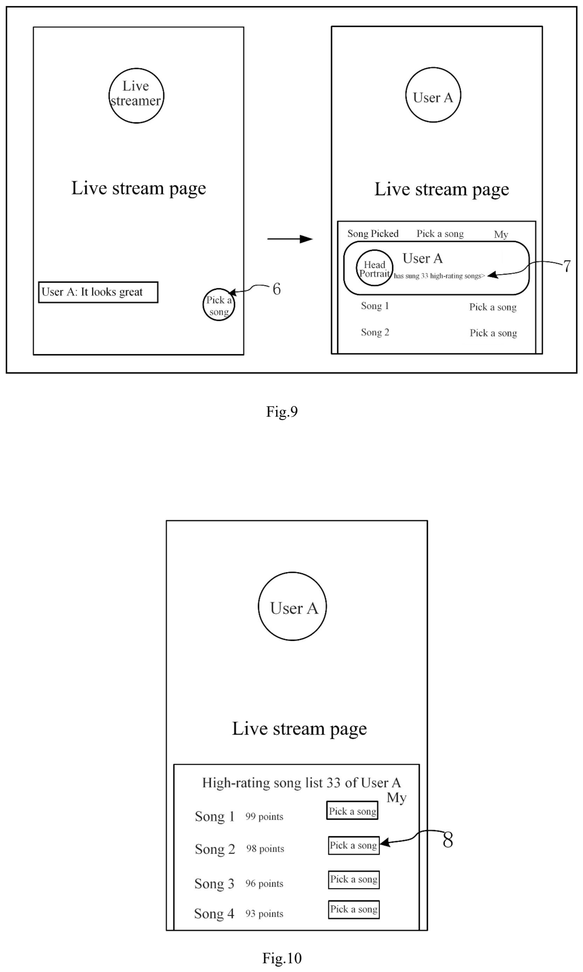

Fig. 9 is a schematic diagram of displaying a target association list according to the embodiment of the present disclosure. As shown in Fig. 9 (shown in the drawing is an example in which the third user is the first user), the first user may execute the panel display operation by clicking certain control 6 in the live stream page and accordingly the current application may display the preset panel of the first user (i.e., user A) in response to this panel display operation, and list display control 7 corresponding to user A, i.e., "33 High-Rating Songs Accomplished", is displayed in the preset panel; when list display control 7 is triggered by clicking, the first list display operation may be executed, in which case the current application may display the high-rating song list (i.e., the target association list) of user A.

The method for interaction according to the embodiment of the present disclosure includes: receiving a page display operation of a first user for a target live stream room; displaying a live stream page of the target live stream room in response to the page display operation, and presenting, in the live stream page, target interaction information in the target live stream room, the target interaction information being used for triggering display of an association list of a corresponding second user, and the second user being a user sending the target interaction information in the target live stream room; displaying, in response to a first list display operation for a target user, a target association list of the target user in the live stream page, the target user being the first user or the user other than the first user in the target live stream room. With this method, the target association list of the target user may be displayed in the live stream page by responding to the first list display operation for the target user, thereby further diversifying the way of viewing the association list and the mode of interaction in the target live stream room and also improving users' interaction experience in the live stream page.

In one embodiment, the association list is a task list, and after displaying a target association list of the target user in the live stream page, the following step is further included:
adding a target task as a to-be-executed task of a preset user in the target live stream room in response to a task adding operation acting on the target association list, in which the preset user includes the first user, the target user, or a live streamer of the target live stream room, and the target task is a task corresponding to the task adding operation in the target association list.

The task list may be considered as a list of performance tasks, such as a list of singing tasks; the task adding operation may refer to an operation of adding the target task, such as an operation of clicking a certain control (such as an adding control) in the page, etc.; the target task is a task corresponding to the task adding operation in the target association list, such as a singing task; and the to-be-executed task may refer to a task that needs to be completed by the preset user in the target live stream room.

The preset user may include the first user, the target user, or the live streamer of the target live stream room, and the target user is a user other than the first user and the live streamer in the target live stream room.

In one implementation, after the target association list of the target user is displayed in the live stream room, the target task may be added as the to-be-executed task of the preset user in the target live stream room in response to the task adding operation acting on the target association list, and the specific adding process may differ by the state of the target live stream room and the current user. Exemplarily, a viewer (such as the first user or the target use) in the target live stream room may execute the task adding operation in his/her own target association list or the target association lists of other viewers, and then may immediately add the target task as his/her own to-be-executed task in the target live stream room; the live streamer in the target live stream room may also execute the task adding operation in his/her own target association list or the target association lists of the viewers, and then may immediately add the target task as his/her own to-be-executed task in the target live stream room, etc..

In one embodiment, the target live stream room is in a first task state, and the adding a target task as a to-be-executed task of a preset user in the target live stream room includes:
adding the target task as a to-be-executed task of the first user in the target live stream room.

The first task state, for example, may be a KTV mode, in which case users in the target live stream room, including the live streamer and the viewers, are all able to sing in the target live stream room.

In one implementation, when the target live stream room is in the first task state, the target task may be added as the to-be-executed task of the first user in the target live stream room in response to the task adding operation acting on the target association list, i.e., when the task adding operation is triggered in the own association list or the association lists of other users, the target task may be added as the own to-be-executed task in the target live stream room.

In this embodiment, the target task that is added may be added as the to-be-executed task of the first user in the target live stream room without making an application to the live streamer in the target live stream room; or the target task that is added may be added as the to-be-executed task of the first user in the target live stream room only after an application is made to the live streamer in the target live stream room and the live streamer gives his/her consent at the same time. This is not defined in this embodiment.

In one embodiment, the target live stream room is in a second task state, and the adding a target task as a to-be-executed task of a preset user in the target live stream room includes:
adding the target task as a to-be-executed task of the first user in the target live stream room, when the first user is the live streamer of the target live stream room, or the first user is a viewer of the target live stream room, a task execution permission of the target live stream room is in an enabled state and the target association list is not the association list of the live streamer of the target live stream room; and
adding the target task as the to-be-executed task of the live streamer in the target live stream room, when the first user is the viewer of the target live stream room, the task execution permission of the target live stream room is in the enabled state and the target association list is the association list of the live streamer of the target live stream room.

The second task state may be a task state different from the first task state, e.g., the second task state may be a karaoke component mode, i.e., when the live streamer in the target live stream room enables the task execution permission, then both the live streamer and the viewers in the target live stream room are able to execute tasks in the target live stream room, such as singing; and when the live streamer in the target live stream room does not enable the task execution permission, only the live streamer is able to sing in the target live stream room. The task execution permission may refer to a permission of adding the target task or a permission of making a task adding application to the live streamer, the fact that the task execution permission is in the enabled state may be considered as giving consent to possession, by the viewers in the target live stream room, of the permission of adding the target task, the fact that the task execution is in a disabled state may be considered as the viewers in the target live stream room having no permission of adding/making an application for adding the target task, the state of the task execution permission may be set by the live streamer in the target live stream room as required, and this is not defined in this embodiment.

In one implementation, when the target live stream room is in the second task state, the specific process of adding the target task may be comprehensively determined based on the first user, the task execution permission, and whether or not the association list is the association list of the live streamer.

Exemplarily, in one embodiment, when the currently-operating user (i.e., the first user) is the live streamer of the target live stream room, or when the currently-operating user is the viewer of the target live stream room, the task execution permission of the target live stream room is in the enabled state and the target association list is not the association list of the live streamer of the target live stream room, the target task may be added as the to-be-executed task of the first user in the target live stream room.

In one embodiment, when the currently-operating user (i.e., the first user) is the viewer of the target live stream room, the task execution permission of the target live stream room is in the enabled state and the target association list is the association list of the live streamer of the target live stream room, the target task may be added as the to-be-executed task of the live streamer in the target live stream room.

In this embodiment, it is required that the process of adding the target task differs by the first user, e.g., when the first user is the live streamer of the target live stream room, the target task may be directly added as the to-be-executed task of the first user in the target live stream room, with no need for other applying operations; but when the first user is the viewer of the target live stream room, the target task may be added as the to-be-executed task of the first user or the live streamer in the target live stream room only after the live streamer in the target live stream room gives a consent to the applying operation.

Fig. 10 is a schematic diagram of adding a target task according to the embodiment of the present disclosure. As shown in Fig. 10, when the currently-operating user (i.e., the first user) is the live streamer of the target live stream room or the viewer of the target live stream room and the target association list is the own association list, song 2 (i.e., the target task) may be added as the own to-be-executed task in the target live stream room after clicking control 8 is triggered.

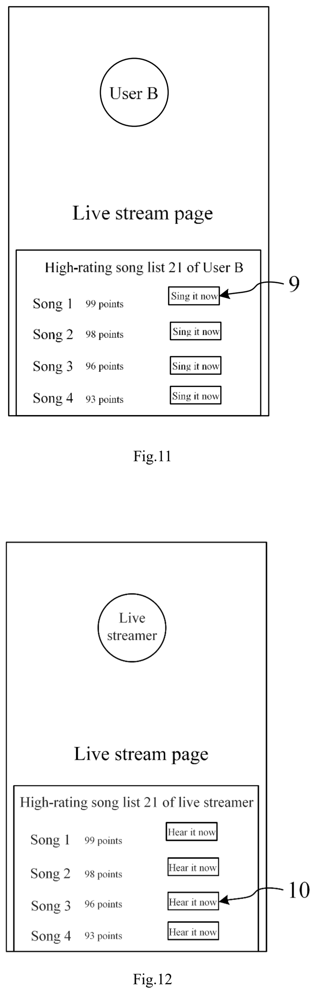

Fig. 11 is a schematic diagram of adding a target task according to the embodiment of the present disclosure. As shown in Fig. 11, when the currently-operating user (i.e., the first user) is the viewer of the target live stream room and the target association lists are the association lists of other users, song 1 (i.e., the target task) may be added as the own to-be-executed task in the target live stream room after clicking control 9 is triggered.

Fig. 12 is a schematic diagram of adding a target task according to the embodiment of the present disclosure. As shown in Fig. 12, when the currently-operating user (i.e., the first user) is the viewer of the target live stream room and the target association list is the association list of the live streamer, song 3 (i.e., the target task) may be added as the to-be-executed task of the live streamer in the target live stream room after clicking control 10 is triggered.

By reference to an example in which the preset task is a song singing task, it may be discovered from the above description that in the embodiments of the present disclosure, the process of singing rating may be saved, the all-time highest point of each song the user has sung is obtained to determine whether this song is a high-rating song, and the number of high-rating songs of the user is counted to serve as the high-rating song list (i.e., the association list); the singing process is openly and synchronously presented, and the number of high-rating songs, the song list and the point of singing are synchronized in real-time from the perspective of the singer and viewers; the status of the point of singing is fed back in real-time, and whether the singer has accomplished the high-rating song achievement is judged from real-time rating results and immediately fed back to all users in the live stream room.

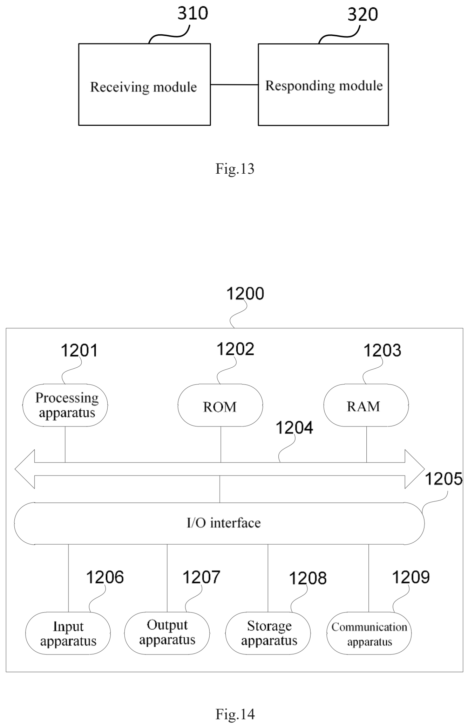

Fig. 13 is a schematic flowchart of an apparatus for interaction according to the embodiment of the present disclosure. As shown in Fig. 13, the apparatus for interaction according to this embodiment may include a receiving module 310 and a responding module 320.

The receiving module 310 is configured to receive a page display operation of a first user for a target live stream room.

The responding module 320 is configured to display a live stream page of the target live stream room in response to the page display operation, and present, in the live stream page, target interaction information in the target live stream room, the target interaction information being used for triggering display of an association list of a corresponding second user, and the second user being a user sending the target interaction information in the target live stream room.

According to the apparatus for interaction provided in the embodiment of the present disclosure, a page display operation of a first user for a target live stream room is received through a receiving module 310; and through the responding module 320, a live stream page of the target live stream room is displayed in response to the page display operation, and target interaction information in the target live stream room is presented in the live stream page, in which the target interaction information is used for triggering display of an association list of a corresponding second user, and the second user is a user sending the target interaction information in the target live stream room. This apparatus presents, in the live stream page, the list information of the association lists sent by the users in the live stream room in the form of interaction information, thereby supporting the users in the live stream room to publish the list information of the association lists as the interaction information in the live stream room and also enriching the mode of interaction of the live stream room as well as the display content of the live stream page.

Alternatively, the second user includes the first user, and the apparatus for interaction according to the embodiment of the present disclosure further includes a sending module.

The sending module is configured to: before presenting, in the live stream page, target interaction information in the target live stream room, send the target interaction information in the target live stream room in response to an information sending operation of the first user.

Alternatively, the second user includes the user other than the first user, and the apparatus for interaction according to the embodiment of the present disclosure further includes an obtaining module.

The obtaining module is configured to: before presenting, in the live stream page, target interaction information in the target live stream room, obtain the target interaction information sent by the user other than the first user in the target live stream room.

Alternatively, the apparatus for interaction according to the embodiment of the present disclosure further includes a first display module.

The first display module is configured to: after the displaying a live stream page of the target live stream room, display, in response to a first list display operation for a target user, a target association list of the target user in the live stream page, the target user being the first user or the user other than the first user in the target live stream room.

Alternatively, the first list display operation includes a triggering operation for target interaction information sent by the target user and/or a triggering operation for a list display control, and the list display control is corresponding to the target user.

Alternatively, the apparatus for interaction according to the embodiment of the present disclosure further includes:
a second display module is configured to: display a preset panel of the first user in response to a panel display operation, in which a list display control corresponding to the first user is displayed in the preset panel; or
a third display module is configured to: display a preset card of the target user in response to a preset card display operation, in which the list display control corresponding to the target user is displayed in the preset card.

Alternatively, the association list is a task list, and the apparatus for interaction according to the embodiment of the present disclosure further includes an adding module.

The adding module is configured to: after displaying a target association list of the target user in the live stream page, add a target task as a to-be-executed task of a preset user in the target live stream room in response to a task adding operation acting on the target association list, in which the preset user includes the first user, the target user, or a live streamer of the target live stream room, and the target task is a task corresponding to the task adding operation in the target association list.

Alternatively, the adding module is specifically configured to:
add the target task as the to-be-executed task of the preset user in the target live stream room.

Alternatively, the target live stream room is in a second task state, and the adding module is specifically configured to:
add the target task as a to-be-executed task of the first user in the target live stream room, when the first user is the live streamer of the target live stream room, or the first user is a viewer of the target live stream room, a task execution permission of the target live stream room is in an enabled state and the target association list is not the association list of the live streamer of the target live stream room; and
add the target task as the to-be-executed task of the live streamer in the target live stream room, when the first user is the viewer of the target live stream room, the task execution permission of the target live stream room is in the enabled state and the target association list is the association list of the live streamer of the target live stream room.

Alternatively, the association list is a task list, and the apparatus for interaction according to the embodiment of the present disclosure further includes:
a fourth display module configured to: display, when a third user executes a target to-be-executed task in the target live stream room, first association list information of the third user in the live stream page, the first association list information being first list information of the association list; and/or
a fifth display module configured to: display preset prompt information in the live stream page when execution of the target to-be-executed task is completed by the third user and a completion level of the target to-be-executed task is greater than a preset completion level threshold.

Alternatively, the association list is a task list, and the apparatus for interaction according to the embodiment of the present disclosure further includes a six display module.

The six display module is configured to: after the displaying a live stream page of the target live stream room, display a target task list of the target live stream room in response to a second list display operation, in which the target task list is used for displaying task information in the target live stream room, the task information corresponding to user for which the association list is not empty includes second association list information of the corresponding users, and the second association list information is second list information of the association list.

The apparatus for interaction according to the embodiment of the present disclosure may execute the method for interaction according to any embodiment of the present disclosure, and has functional modules and advantageous effects that correspond to execution of the method for interaction. For technical details not described in detail in this embodiment, reference may be made to the method for interaction according to any embodiment of the present disclosure.

Hereinafter, reference is made to Fig. 14 that shows a structural schematic diagram of an electronic device 1200 suited to implementation of the embodiments of the present disclosure. Terminal devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device illustrated in Fig. 14 is merely an example, and should not pose any limitation to the functions and the range of use of the embodiments of the present disclosure.

As shown in Fig. 14, the electronic device 1200 may include a processor (such as a central processing unit, and a graphics processor) 1201, it may execute various appropriate actions and processes according to a program stored in a read-only memory (ROM) 1202 or a program loaded from a storage apparatus 1208 to a random access memory (RAM) 1203. In RAM 1203, various programs and data required for operations of the electronic device 1200 are also stored. The processor 1201, ROM 1202, and RAM 1203 are connected to each other by a bus 1204. An input/output (I/O) interface 1205 is also connected to the bus 1204.

Typically, the following apparatuses may be connected to the I/O interface 1205: an input apparatus 1206 such as a touch screen, a touchpad, a keyboard, a mouse, a camera, a microphone, an accelerometer, and a gyroscope; an output apparatus 1207 such as a liquid crystal display (LCD), a loudspeaker, and a vibrator; a storage apparatus 1208 such as a magnetic tape, and a hard disk drive; and a communication apparatus 1209. The communication apparatus 1209 may allow the electronic device 1200 to wireless-communicate or wire-communicate with other devices so as to exchange data. Although Fig. 14 shows the electronic device 1200 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 1209, or installed from the storage apparatus 1208, or installed from ROM 1202. When the computer program is executed by the processor 1201, the above functions defined in the method in the embodiments of the present disclosure are executed.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-mentioned computer-readable medium may be included in the above-mentioned electronic device, or may also exist alone without being assembled into the electronic device.

The above-mentioned computer-readable medium carries one or more programs that, when executed by the electronic device, causes the electronic device to: receive a page display operation of a first user for a target live stream room; and display a live stream page of the target live stream room in response to the page display operation, and present, in the live stream page, target interaction information in the target live stream room, the target interaction information being used for triggering display of an association list of a corresponding second user, and the second user being a user sending the target interaction information in the target live stream room.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc..

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, provided in Example 1 is a method for interaction that includes:
receiving a page display operation of a first user for a target live stream room; and
displaying a live stream page of the target live stream room in response to the page display operation, and presenting, in the live stream page, target interaction information in the target live stream room, the target interaction information being used for triggering display of an association list of a corresponding second user, and the second user being a user sending the target interaction information in the target live stream room.

According to one or more embodiments of the present disclosure, in the method of Example 2 according to Example 1, the second user includes the first user, and the method, before presenting, in the live stream page, target interaction information in the target live stream room, further includes:
sending the target interaction information in the target live stream room in response to an information sending operation of the first user.

According to one or more embodiments of the present disclosure, in the method of Example 3 according to Example 1, the second user includes a user other than the first user, and the method, before presenting, in the live stream page, target interaction information in the target live stream room, further includes:
obtaining the target interaction information sent by the user other than the first user in the target live stream room.

According to one or more embodiments of the present disclosure, the method of Example 4 according to Example 1, after the displaying a live stream page of the target live stream room, further includes:
displaying, in response to a first list display operation for a target user, a target association list of the target user in the live stream page, the target user being the first user or a user other than the first user in the target live stream room.

According to one or more embodiments of the present disclosure, in the method of Example 5 according to Example 4, the first list display operation includes a triggering operation for target interaction information sent by the target user and/or a triggering operation for a list display control, and the list display control is corresponding to the target user.

According to one or more embodiments of the present disclosure, the method of Example 6 according to Example 5 further includes:
displaying a preset panel of the first user in response to a panel display operation, in which a list display control corresponding to the first user is displayed in the preset panel; or
displaying a preset card of the target user in response to a preset card display operation, in which the list display control corresponding to the target user is displayed in the preset card.

According to one or more embodiments of the present disclosure, in the method of Example 7 according to Example 4, the association list is a task list, and the method, after displaying a target association list of the target user in the live stream page, further includes:
adding a target task as a to-be-executed task of a preset user in the target live stream room in response to a task adding operation acting on the target association list, in which the preset user includes the first user, the target user, or a live streamer of the target live stream room, and the target task is a task corresponding to the task adding operation in the target association list.

According to one or more embodiments of the present disclosure, in the method of Example 8 according to Example 7, the target live stream room is in a first task state, and the adding a target task as a to-be-executed task of a preset user in the target live stream room includes:
adding the target task as a to-be-executed task of the first user in the target live stream room.

According to one or more embodiments of the present disclosure, in the method of Example 9 according to Example 7, the target live stream room is in a second task state, and the adding a target task as a to-be-executed task of a preset user in the target live stream room includes:
adding the target task as a to-be-executed task of the first user in the target live stream room, when the first user is the live streamer of the target live stream room, or the first user is a viewer of the target live stream room, a task execution permission of the target live stream room is in an enabled state and the target association list is not the association list of the live streamer of the target live stream room; and
adding the target task as the to-be-executed task of the live streamer in the target live stream room, when the first user is the viewer of the target live stream room, the task execution permission of the target live stream room is in the enabled state and the target association list is the association list of the live streamer of the target live stream room.

According to one or more embodiments of the present disclosure, in the method of Example 10 according to any of Examples 1 to 9, the association list is a task list, and the method further includes:
displaying, when a third user executes a target to-be-executed task in the target live stream room, first association list information of the third user in the live stream page, the first association list information being first list information of the association list; and/or
displaying preset prompt information in the live stream page when execution of the target to-be-executed task is completed by the third user and a completion level of the target to-be-executed task is greater than a preset completion level threshold.

According to one or more embodiments of the present disclosure, in the method of Example 11 according to any of Examples 1 to 10, the association list is a task list, and the method, after the displaying a live stream page of the target live stream room, further includes:
displaying a target task list of the target live stream room in response to a second list display operation, in which the target task list is used for displaying task information in the target live stream room, the task information corresponding to user for which the association list is not empty includes second association list information of the corresponding users, and the second association list information is second list information of the association list.

According to one or more embodiments of the present disclosure, provided in Example 12 is an apparatus for interaction that includes:
a receiving module configured to receive a page display operation of a first user for a target live stream room; and
a responding module configured to display a live stream page of the target live stream room in response to the page display operation, and present, in the live stream page, target interaction information in the target live stream room, the target interaction information being used for triggering display of an association list of a corresponding second user, and the second user being a user sending the target interaction information in the target live stream room.

According to one or more embodiments of the present disclosure, provided in Example 13 is an electronic device that includes:
one or more processors; and
a memory for storing one or more programs,
the one or more programs, when executed by the one or more processors, cause the one or more processors to implement the method for interaction according to any of Examples 1 to 11.

According to one or more embodiments of the present disclosure, provided in Example 14 is a computer-readable storage medium having a computer program stored thereon that, when executed by a processor, implements the method for interaction according to any of Examples 1 to 11.

According to one or more embodiments of the present disclosure, provided in Example 15 is a computer program product that, when executed by a computer, causes the computer to implement the method for interaction according to any of Examples 1 to 11.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. A method for interaction, comprising:
receiving a page display operation of a first user for a target live stream room; and
displaying a live stream page of the target live stream room in response to the page display operation, and presenting, in the live stream page, target interaction information in the target live stream room, wherein the target interaction information is used for triggering display of an association list of a corresponding second user, and the second user is a user sending the target interaction information in the target live stream room.

2. The method according to claim 1, wherein the second user comprises the first user, and the method, before the presenting, in the live stream page, target interaction information in the target live stream room, further comprises:
sending the target interaction information in the target live stream room in response to an information sending operation of the first user.

3. The method according to claim 1, wherein the second user comprises a user other than the first user, and the method, before the presenting, in the live stream page, target interaction information in the target live stream room, further comprises:
obtaining target interaction information sent by the user other than the first user in the target live stream room.

4. The method according to any of claims 1 to 3, wherein the method, after the displaying a live stream page of the target live stream room, further comprises:
displaying, in response to a first list display operation for a target user, a target association list of the target user in the live stream page, wherein the target user is the first user or a user other than the first user in the target live stream room.

5. The method according to claim 4, wherein the first list display operation comprises a triggering operation for target interaction information sent by the target user and/or a triggering operation for a list display control, and the list display control is corresponding to the target user.

6. The method according to claim 5, further comprising:
displaying a preset panel of the first user in response to a panel display operation, wherein a list display control corresponding to the first user is displayed in the preset panel; or
displaying a preset card of the target user in response to a preset card display operation, wherein the list display control corresponding to the target user is displayed in the preset card.

7. The method according to any of claims 4 to 6, wherein the association list is a task list, and the method, after the displaying a target association list of the target user in the live stream page, further comprises:
adding a target task as a to-be-executed task of a preset user in the target live stream room in response to a task adding operation acting on the target association list, wherein the preset user comprises the first user, the target user, or a live streamer of the target live stream room, and the target task is a task corresponding to the task adding operation in the target association list.

8. The method according to claim 7, wherein the target live stream room is in a first task state, and the adding a target task as a to-be-executed task of a preset user in the target live stream room comprises:
adding the target task as a to-be-executed task of the first user in the target live stream room.

9. The method according to claim 7, wherein the target live stream room is in a second task state, and the adding a target task as a to-be-executed task of a preset user in the target live stream room comprises:
adding the target task as a to-be-executed task of the first user in the target live stream room, when the first user is the live streamer of the target live stream room, or the first user is a viewer of the target live stream room, a task execution permission of the target live stream room is in an enabled state, and the target association list is not an association list of the live streamer of the target live stream room; and
adding the target task as a to-be-executed task of the live streamer in the target live stream room, when the first user is the viewer of the target live stream room, the task execution permission of the target live stream room is in the enabled state, and the target association list is the association list of the live streamer of the target live stream room.

10. The method according to any of claims 1 to 9, wherein the association list is a task list, and the method further comprises:
displaying, when a third user executes a target to-be-executed task in the target live stream room, first association list information of the third user in the live stream page, wherein the first association list information is first list information of the association list; and/or
displaying preset prompt information in the live stream page when execution of the target to-be-executed task is completed by the third user and a completion level of the target to-be-executed task is greater than a preset completion level threshold.

11. The method according to any of claims 1 to 10, wherein the association list is a task list, and the method, after the displaying a live stream page of the target live stream room, further comprises:
displaying a target task list of the target live stream room in response to a second list display operation, wherein the target task list is used for displaying task information in the target live stream room, task information corresponding to a user for which the association list is not empty comprises second association list information of a corresponding user, and the second association list information is second list information of the association list.

12. An apparatus for interaction, comprising:
a receiving module, configured to receive a page display operation of a first user for a target live stream room; and
a responding module, configured to display a live stream page of the target live stream room in response to the page display operation, and present, in the live stream page, target interaction information in the target live stream room, wherein the target interaction information is used for triggering display of an association list of a corresponding second user, and the second user is a user sending the target interaction information in the target live stream room.

13. An electronic device, comprising:
at least one processor; and
a memory communicatively connected with the at least one processor,
wherein a computer program executable by the at least one processor is stored in the memory, and the computer program, when executed by the at least one processor, causes the at least one processor to execute the method for interaction according to any of claims 1 to 11.

14. A computer-readable storage medium, having computer instructions stored therein, wherein the computer instructions, when executed by a processor, implement the method for interaction according to any of claims 1 to 11.

15. A computer program product, comprising a computer program, wherein the computer program, when executed by a processor, implements the method for interaction according to any of claims 1 to 11.
